(19) Europäisches Patentamt
European Patent Office
Office européen des brevets

(11) **EP 3 823 088 A1**

(12) **EUROPEAN PATENT APPLICATION**

(43) Date of publication:
**19.05.2021 Bulletin 2021/20**

(51) Int Cl.:
*H01P 1/18* (2006.01)     *H01Q 3/34* (2006.01)

(21) Application number: **19209271.6**

(22) Date of filing: **14.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ALCAN Systems GmbH**
**64293 Darmstadt (DE)**

(72) Inventors:
• **Ayluctarhan, Muhammed**
  **64825 Darmstadt (DE)**
• **Nam Jin, Hyung**
  **64297 Darmstadt (DE)**

(74) Representative: **Habermann Intellectual Property Partnerschaft von Patentanwälten mbB**
**Dolivostraße 15A**
**64293 Darmstadt (DE)**

(54) **LIQUID CRYSTAL ANTENNA PANEL SYSTEM WITH A TEMPERATURE SENSOR**

(57) The present invention pertains to a liquid crystal antenna panel for a phased array antenna, comprising a liquid crystal-based phase shifter, a bottom and a top substrate, a liquid crystal provided between the two substrates, and conductive plates positioned on each of the substrates and spaced apart from each other. The conductive plates form capacitors which function as temperature sensor for determining the temperature of the antenna panel. The invention furthermore pertains to a phased array antenna comprising at least one of the above-mentioned panels and to a method for operating a phased array antenna.

FIG 1a

## Description

Technical Field

The present invention pertains to a liquid crystal antenna panel system for a phased array antenna, comprising a bottom and a top substrate, a tunable dielectric material provided between the two substrates, a liquid crystal-based phase shifter, conductive plates positioned on each of the substrates and spaced apart from each other, and a memory device. The conductive plates form a capacitor which functions as a temperature sensor for determining the temperature of the antenna panel. The invention furthermore pertains to a phased array antenna comprising at least one of the above-mentioned panels and a method for operating said antenna.

Background of the invention

Phased array antennas use a multitude of liquid crystal antenna panels to emit and receive electromagnetic signals. Phase shifting devices are used for modifying the phase of the respective signals of the antenna panels to enable for controlling the superposition of the signals of all of the antenna panels.

When a plurality of initial electromagnetic signals of the same frequency are superimposed, the resulting signal depends on the phase difference between the superimposed electromagnetic signals. The resulting electromagnetic signals can be reinforced or weakened relative to the initial signals. Furthermore, by superimposing two or more initial electromagnetic signals or waves that are emitted by respective panels, the phase difference between the emitted electromagnetic waves will determine a direction of a reinforced superposition of the electromagnetic waves, resulting in a preferred direction of irradiation originating from the respective antenna panels. Thus, by means of a suitable superposition of the individual signals after performing a predetermined phase shift to each of the signals, a desired direction dependence can be caused with the transmission or with the receipt of radio signals.

In order to intensify the reception or emission of electromagnetic irradiation in or from a given direction, a phased array antenna comprises several antenna elements or panels that are distributed next to each other. The phase difference of electromagnetic signals received or emitted by the respective antenna panels can be predetermined in such a manner that the superposition of the respective signals is maximized for a given direction, resulting in enhanced signal sensitivity or signal emission for said direction.

The phase shifting device necessary for generating required phase differences between individual antenna panels may include a linear transmission line comprising a first electrode and a second electrode that are spaced apart, wherein a tunable dielectric material is arranged between the first electrode and the second electrode. The phase difference created by a tunable phase shifting device can be tuned, i.e. it can be operated to produce different phase shifts whereby the respective phase difference can be modified and controlled by a control setting applied to the tunable dielectric material. The tunable dielectric material affects the phase of the signal along the linear transmission line. A phased array antenna with several antenna panels that are interconnected with such tunable phase shifting devices can be operated such that a direction of enhanced signal sensitivity or signal emission can be changed at will.

However, the performance of a corresponding antenna panel depends heavily on the characteristics of the dielectric material used for tuning the phase shifting device. A commonly used tunable dielectric material is a liquid crystal (LC), provided inside the panel and between two substrates of the panel.

In particular, the characteristics of LC such as its dielectric constant change with the temperature of the liquid crystal. This change in characteristics of the liquid crystal may have an unwanted effect on the performance such as the rf performance of the whole antenna. According to the state of the art, antenna panels have to be temperature controlled for a stable performance of the corresponding antenna.

In order to be able to compensate for unwanted temperature effects, it is necessary to determine the temperature during operation of the antenna element. It is known in prior art to add a temperature sensor on top of one of the substrates and to detect the temperature of the respective substrate by evaluating the measurement signals of the temperature sensor. On the basis of the temperature that is detected by the temperature sensor, the antenna panel can be heated or cooled in order to maintain a constant temperature of the antenna panel during operation.

Considering such a temperature dependency and the effort put into temperature control systems of corresponding phased array antennas, a goal of the present invention is to provide an improved antenna panel system with improved performance. In particular, the antenna panel according to the invention should allow for an easy detection of the temperature that might cause unwanted temperature effects as well as for easy compensation of unwanted temperature effects during operation of the antenna panel system.

Summary of the invention

This goal is achieved by a liquid crystal antenna panel system according to claim 1, a phased array antenna according to claim 8 and a method according to claim 10 for operating a phased array antenna. Further embodiments are subject of the dependent claims.

According to the invention, a liquid crystal antenna panel system for a phased array antenna is provided. At least one liquid crystal panel is part of the presently described panel system. Said panel comprises a bottom and a top substrate, a liquid crystal provided between the two substrates, a liquid crystal-based phase shifter, and conductive plates positioned on each of the substrates and spaced at a distance from each other. The conductive plates may be positioned directly on the substrates. Alternatively, there may be one or more intermediate layers between the conductive plates and the substrates. The conductive plates may be positioned directly opposite each other. It is also possible to arrange the conductive plates next to each other or with an overlap in order to create a capacitor formed by the conductive plates and the liquid crystal material arranged between the two conductive plates.

According to the invention, the conductive plates form at least one capacitor between the substrates, said capacitor being connectable to an electronic circuit and functioning as a temperature sensor for sensing the temperature of the liquid crystal antenna panel, as the capacity of the capacitor depends on the dielectric characteristics of the liquid crystal material which in turn depend in a known way on the temperature.

Additionally, to the panel described above, at least one memory device is provided as part of the liquid crystal antenna panel system. The memory device may be formed integrally with the panel. For most applications it is considered advantageous that the memory device may be arranged spaced apart from but connected to the panel. The memory device may be connected electronically to the panel's capacitor. In particular, the memory device may be connected to the capacitor via the electronic circuit and/or the memory device may be part of the electronic circuit. In particular, the memory device may be connected to the capacitor via an antenna control unit. Said antenna control unit may be designed to read data stored in the memory device and to determine the capacitance of the capacitor. It is possible to connect one memory device of a phased array antenna with some or with all of the antenna panels that are included within the phased array antenna.

The electronic circuit may indicate the capacitance or generally speaking the characteristics of the capacitor, which in return may be used to determine the temperature of the capacitor or rather a value indicative of the temperature of the liquid crystal material or the antenna panels close to the capacitor. Because of the described arrangement of the capacitor, the antenna panel temperature may be measured inside the antenna enclosure or rather inside individual panels of the antenna and as close as possible to the LC layer present inside the panels. The temperature can be measured at different positions inside the antenna panels. An ideal position for measuring the LC temperature might be at the actual position of or within the liquid crystal, i.e. in between the substrates of the panel, where the liquid crystal is provided.

According to the invention, a look-up table is stored in the memory device, said look-up table comprising characteristics of the liquid crystal antenna panel system, wherein the liquid crystal antenna panel system is designed to determine the temperature of the liquid crystal antenna panel from an output signal of the capacitor and the look-up table. The look up table is stored in the memory device connected to the electronic circuit or forming a part of the electronic circuit. The output signal of the capacitor may be a response to an input signal received by the capacitor, wherein the output signal may be a function of, amongst others, the temperature of the capacitor.

This output signal may therefore be indicative of the temperature of the liquid crystal material or of the antenna panels close to the capacitor that provided for the output signal. The output signal may be compared to corresponding signal values stored in the look-up table and the data stored in the look-up table may indicate the temperature of the capacitor as a function of the output signal of the capacitor. The term "indicate the temperature" may be understood in a broad way, as the temperature value itself does not need to be stored in the look-up table and does not need to be output in any way by the electronic circuit.

By positioning the capacitor in the above outlined manner, an antenna can be provided which is easier to maintain independent of temperature changes than antennas known in the art. In particular, the temperature of the antenna panels can be measured easily and precisely. It is hence possible to eliminate the need for a temperature regulation or adjustment of the panel all together. Instead, the temperature driven changes of the characteristics of the LC can be compensated for electronically rather than by actively cooling or heating the antenna to a desired temperature. A predictable performance of the antenna can therefore be ensured without intricate temperature adjustment systems.

In a preferred embodiment of the invention, the substrates are glass panels and/or the conductive plates are metal plates and/or the antenna panel system comprises at least one electronic circuit connected to the capacitor.

The capacitor and/or the electronic circuit may be integrated with the antenna panel. In particular, the capacitor and/or the electronic circuit may be provided on one or on both of the substrates. Alternatively, the electronic circuit may be spaced apart from the substrate and positioned in a distinct electronic unit connected to the capacitor by some electronic connection. It is also possible to integrate the electronic circuit into the memory device.

The material of the conductive plates may be a metal or some other conductive material attached to the substrates. Apart from glass, synthetic material such as plastic material or a composite material such as fiberglass may be used for manufacture of the substrates as an alternative.

In another preferred embodiment, at least two capacitors are provided in one panel, wherein said capacitors are connected in parallel. The size or surface area of the capacitor or the capacitors corresponds to the area of the temperature sensor of the antenna panel. The greater the area of the capacitor, the greater its capacitance. Temperature changes of the antenna panel change the capacitance of the capacitor provided therein. This change in capacitance of the capacitor may be used to determine the temperature changes of the antenna panel. Therefore, a capacitor with greater surface and hence greater capacitance may provide more accurate temperature information.

In another preferred embodiment, a temperature indicator to indicate at least a high and a low temperature regime is provided. The temperature indicator may be different to the capacitor functioning as a temperature sensor. The temperature indicator may be designed to indicate whether the temperature of the antenna panel is in one of two or more separate temperature ranges, without necessarily indicating an actual temperature value. In a simple variant, the temperature indicator is designed to indicate whether the temperature of the antenna panel is in one of precisely two separate temperature regimes. The temperature indicator therefore does not need to indicate precise temperature values. However, the temperature indicator may as well be some sort of thermometer, which is capable of indicating actual temperature values. As the capacitance of the capacitor may be identical for a low and a high temperature, a temperature measurement on the basis of the capacitance may be ambiguous. The temperature indicator will enable the system to determine whether the panel is in a low or a high temperature regime. Once the system establishes the broad temperature regime of the panel by means of the temperature indicator, the capacitance of the capacitor can be linked to a precise temperature without any ambiguity. The temperature indicator may be connected to the electronic circuit and/or to other electronic components such as an antenna control unit for reading the temperature regime indicated by the temperature indicator and controlling the antenna panel or rather its phase shifting devices accordingly. A temperature indicator may not be present at each and every panel of an antenna, as the broad temperature range will usually be the same for all of the antenna panels. It is therefore possible to use only one or only a few, e.g. two, three or four temperature indicators for indicating the temperature range of all antenna panels of an antenna array.

In another preferred embodiment, the electronic circuit comprises an evaluation circuit that evaluates a response signal from the capacitor. Feeding the capacitance or rather a response signal of the capacitor to an evaluation circuit, a change in temperature can be determined from the changed characteristics or response of the capacitor to an input signal and with the help of a microcontroller. Alternatively, or additionally, other components such as e.g. an operational amplifier may be included in the electronic circuit. In general, any electronic circuit capable of reading the capacitance of the capacitor can be employed in the invention.

In another preferred embodiment, a voltage applied to the capacitor is a pulse width modulated voltage. The frequency and/or the pulse width of the pulsed signal of the voltage returned by the capacitor in response to the applied signal will vary as a function of the temperature of the capacitor. This change can be measured and an exact temperature of the capacitor and hence the antenna panel can be deduced.

It is also possible according to another embodiment of the invention to apply a dc voltage to the capacitor. With dc voltage it is possible to measure different voltage levels which supports the identification and differentiation of a change of capacitance.

In another preferred embodiment, the antenna panel system comprises an antenna control unit, in which the look-up table is stored, said look-up table comprising characteristics of the liquid crystal antenna panel, in particular for different temperatures, wherein the characteristics comprise the dielectric constant of the liquid crystal and/or the phase shifts for given bias voltages and/or the temperature effect on the voltage applied to the capacitor.

The antenna control unit may be connected to the capacitor and/or to the electronic circuit of the antenna panel. The electronic circuit may be connected or attached to the antenna panel. The memory device may be part of the antenna control unit. The antenna control unit may in effect compare the capacitance of the capacitor and/or the pulse width and/or the frequency of the voltage returned by the capacitor to corresponding values stored in the look-up table. The corresponding values stored in the look-up table may in return indicate temperatures, which correspond to the measured capacitor values. Hence, by comparing the measured values to values stored in the look-up table it is possible to deduce the actual temperature of the capacitor and hence of the corresponding antenna panel area.

The invention is further directed at a phased array antenna comprising at least one liquid crystal antenna panel system according to any of claims 1 to 7. The antenna may contain a multitude of antenna panel systems, which are combined together to enable the phased array functionality of the antenna.

In a preferred embodiment, the antenna comprises at least one electronic circuit connected to the capacitor. The antenna therefore combines individual panels and further electronic components required for the functioning of the antenna. The antenna may further include some mounting device which may be designed for mounting the panels and/or further electronic components of the antenna. The antenna may comprise a temperature adjustment unit and/or multiple separate circuits, each separate circuit being dedicated to a different liquid crystal antenna panel system of the antenna.

As the performance of the antenna panel and thus the performance of the phased array antenna may deteriorate due to unfavorable temperature conditions, an active temperature adjustment unit may be provided.

The temperature adjustment unit may adjust the temperature of the panels and/or the entire antenna in order to prevent such temperature induced damage. The temperature adjustment unit may comprise one or more coolers and/or one or more heaters which are designed for adjusting the temperature of the antenna panels. The temperature adjustment unit may be controlled by the antenna control unit cited above. The presently described device for measuring the temperature of liquid crystal panels can be used for generating a control value for controlling the active temperature adjustment unit of the antenna, such that the temperature of the antenna panels is maintained actively in a desired range. The temperature adjustment unit may also prevent possibly irreversible damage of the liquid crystal material of the antenna as well as other components of the antenna due to undesired extreme temperature conditions.

The temperature regulation unit may be an integral part of the antenna. It may comprise heating and/or cooling elements for varying the temperature of the antenna panels. Said heating and/or cooling elements may be allocated to individual antenna panels. In combination with the capacitor-based temperature sensors, the temperature of the antenna can be not only compensated for electronically but also actively altered to be in desired and/or most suitable temperature ranges. The compensation of temperature effects and alteration of the temperature can be performed on an antenna panel level. This means, individual antenna panels may be tempered and/or compensated individually.

The invention is further directed at a method for operating a phased array antenna according to claim 8 or 9. The method comprises the steps:

inputting an input signal into a capacitor located within a liquid crystal antenna panel of the antenna, measuring a corresponding output signal of the capacitor, determining, from a look-up table, a value representative of the current temperature of the capacitor based on the output signal, and

adjusting an input signal into a phase shifter of the antenna based on another look-up table and the previously determined value representative of the current temperature of the capacitor.

The output signal of the capacitor can be understood as its response to the input signal received by the capacitor. The term "look-up table" may be understood in a broad sense, meaning that the table may comprise one or more sub-tables, which may be regarded as look-up tables in their own right. If presently reference is made to one or more tables, in which data is stored, this in fact may mean any number of tables, in which numerous data values can be stored.

In a preferred embodiment the method comprises a step of determining the temperature regime of the capacitor by means of a temperature indicator. This step can be independent of the determination of the value representative of the current temperature of the capacitor cited above.

As previously stated, the capacitance of the capacitor and therefore its response to an input signal may be identical for a low and a high temperature of the capacitor. Therefore, a temperature measurement of the capacitor based on the capacitance alone may be ambiguous. The use of a temperature indicator will enable the system to determine whether the capacitor and therefore the panel is in a low or a high temperature regime. According to the method, once the broad temperature range is established by means of the temperature indicator, the capacitance of the capacitor can be linked to a precise temperature stored in a corresponding look-up table without any ambiguity.

In another preferred embodiment the step of adjusting the input signal into the phase shifter takes into account the temperature regime of the capacitor determined by means of the temperature indicator. This additional consideration of the temperature regime for the adjustment of the input signal into the phase shifter may be dependent on a change of the temperature regime. In such a case, the temperature indicator may indicate the temperature of the capacitor to the antenna control unit. Said antenna control unit may hence receive subsequent readings of the temperature indicator and compare said subsequent readings to each other. When said readings indicate that no change of temperature regime of the capacitor has occurred, no adjustment of the signal into the phase shifter may be performed by the antenna control unit. Only when a change of temperature regime is registered a corresponding adjustment of the input signal into the phase shifter may be performed by the antenna control unit.

In another preferred embodiment the input signal into the capacitor is a pulse width modulated voltage. The pulse width modulated voltage may be of a defined input frequency. Said input frequency may yield an altered response frequency of the capacitor as a function of the capacitor's temperature and hence its capacitance. The capacitor's capacitance and hence its temperature may be deduced easily from the difference between the input frequency and the frequency response of the capacitor.

In another preferred embodiment the input signal into the phase shifter is a voltage. The input voltage may be determined from the look-up table in combination with the previously determined temperature of the capacitor. As a consequence of varying capacitor temperatures, the voltage for achieving the same phase shift may vary accordingly and may be adjusted for compensating the temperature dependence of the capacitor.

In another preferred embodiment the temperature of the liquid crystal antenna panel is regulated by means of a temperature regulation unit and based on the previously determined value representative of the current temperature of the capacitor. The temperature regulation unit may comprise heating and/or cooling elements for regulating the temperature of the panels. Although the invention allows for the operation of a phased array antenna without any temperature regulation of the antenna panels, such a temperature regulation may be employed together with the invention. This may be beneficial in temperature ranges, in which the temperature effects are such that an additional temperature regulation enhances the operation of the antenna. For example, if an antenna panel is at a very high or a very low temperature, at which the input signal into the phase shifter may not be adjusted sufficiently using the look-up tables alone, additional temperature regulation may be employed to put the panel into a temperature range, in which the use of look-up tables provides sufficient adjustment of the input signal into the phase shifter.

Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications, variations and combinations of the embodiments can be made, without deviating from the innovative concepts of the invention. Like parts depicted in the drawings are referred to by the same reference numerals.

Figure 1a is a schematic sectional view of a phased array antenna panel including capacitor components,

Figure 1b is a schematic perspective view of two substrates of an antenna panel including capacitor components,

Figures 2a and 2b illustrate the functioning of the capacitor included in the antenna panel,

Figures 3a and 3b illustrate the positioning of two capacitors and their wiring on two substrates of an antenna panel in a perspective and a top view,

Figures 4a and 4b illustrate the positions of the capacitor components on two substrates forming an antenna panel,

Figure 5 is a schematic view of two antenna panels including two capacitors each,

Figure 6 is a graph depicting the change of dielectric properties of liquid crystal as a function of temperature,

Figure 7 is a graph depicting the capacitor capacitance as a function of temperature and capacitor size,

Figure 8 is a graph denoting the relation between phase shifts and bias voltage of a single phase shifter for different temperatures,

Figure 9 is a schematic view of the electronic circuit connected to the capacitor, and

Figure 10 is a flow diagram describing the functioning of the antenna.

Detailed description of the invention

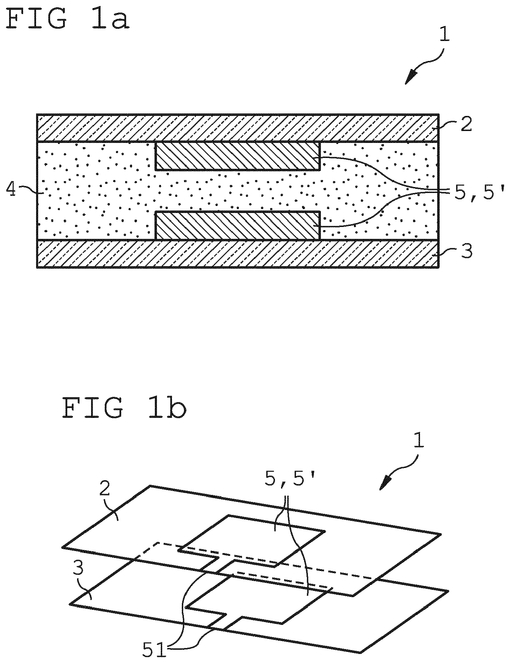

Figure 1a is a schematic sectional view of a phased array antenna panel 1 including capacitor components of a capacitor. The liquid crystal antenna panel 1 comprises a bottom substrate 2 and a top substrate 3 which contain a liquid crystal material 4. The liquid crystal material 4 is provided between the two substrates 2, 3 together with conductive plates 5, 5'.

A phase shifter working on the liquid crystal material 4 may be provided inside the space defined by the substrates 2, 3 but is not shown in the figures. The phase shifter or phase shifting device is one of the key components which are necessary to build phased array antennas with adaptive beam forming. The phase shifter is a tunable phase shifting device, meaning a device which dynamically can adjust the phase or the delay of a radiofrequency signal. Usually, there is at least one phase shifting device for each radiating element or antenna panel 1 of the entire phased array antenna. Each phase shifter is fed by a feed network. Due to the usually required large number of radiating elements, an at least equally large number of phase shifting devices must be integrated within a limited area in such a phase array antenna.

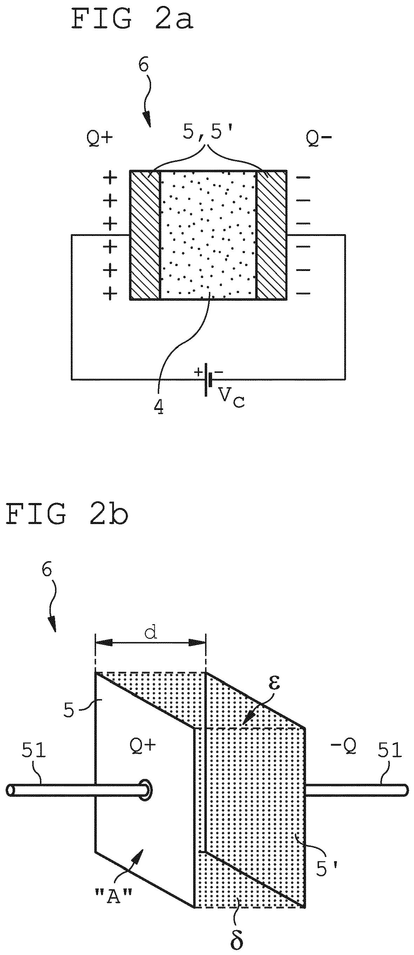

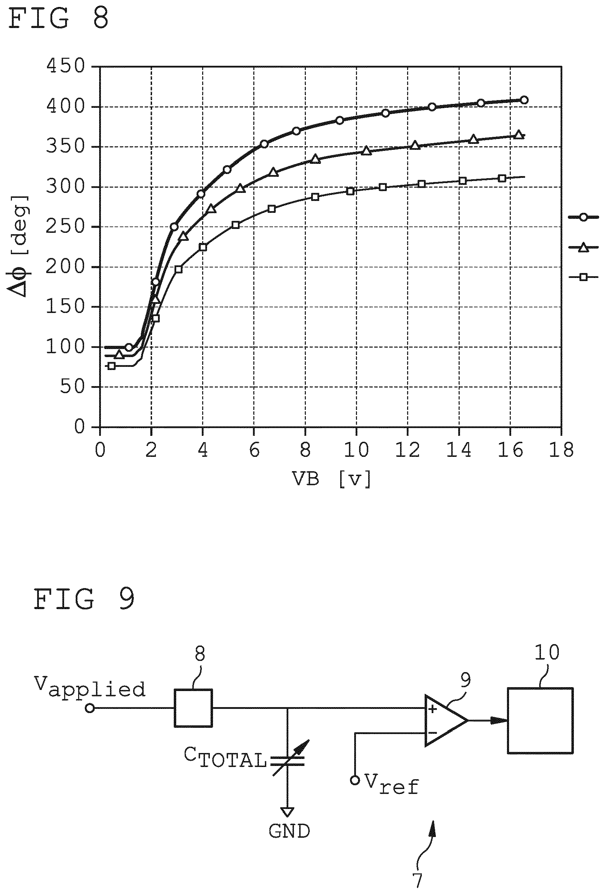

The antenna panel 1 comprises at least two conductive plates 5, 5' positioned on each of the substrates 2, 3 and spaced at a distance from each other. The conductive plates 5, 5' form at least one capacitor 6 shown in figures 2a, 2b and positioned between the substrates 2, 3. The capacitor 6 thus formed is connectable to an electronic circuit 7 shown in figure 9 as an example and functioning as a temperature sensor or as part of a temperature sensor. The antenna panel 1 shown in figures 1a and 1b is part of the present invention's antenna panel 1 system, the systems comprising further elements such as a memory device. The further elements of the system may be formed integrally with the panel 1 or may be spaced apart from the panel 1 but connected thereto.

Figure 1b is a schematic perspective view of two substrates 2, 3 of an antenna panel including two conductive plates 5, 5' as capacitor components. The conductive plates 5, 5' may be positioned opposite towards each other or next to each other and/or may be of identical shape. The conductive plates 5, 5' may be connected to an electronic circuit via leads 51. The leads 51 may be coplanar with regard to the respective conductive plate 5, 5' and/or may be made of the same material as the conductive plates 5, 5'. One substrate 2, 3 and its at least one corresponding conductive plate 5, 5' may be arranged in a symmetrical manner, such that a complete antenna panel 1 may comprise two identical substrates 2, 3 and conductive plate 5, 5' assemblies.

The conductive plates 5, 5' forming the capacitor 6 may be used to measure the antenna or rather panel temperature because of the temperature sensitivity of the capacitor. The capacitance C of the capacitor 6 formed by conductive plates 5, 5' can be calculated according to formula 1:

$$(Formula\ 1) \quad C = \varepsilon 0\ A/d$$

Here, $\varepsilon 0$ is the dielectric constant or permittivity, A is the area of the conductive plate 5, 5' and d is the distance between two such opposing conductive plates 5, 5'.

Figures 2a and 2b illustrate the functioning of the capacitor 6 included in the antenna panel 1 of figures 1a and 1b. Figure 2a shows a capacitor 6 comprising to opposing or neighboring conductive plates 5, 5', which are arranged in parallel to each other. The two conductive plates 5, 5' are separated by a dielectric, such as a liquid crystal 4 in the case of the present invention's liquid crystal antenna panel.

If a voltage Vc is applied to the conductive plates 5, 5', electrical charges Q+ and Q- are distributed between the two conductive plates 5, 5' such that the capacitor 6 is charged up to the voltage Vc level. The corresponding charge distribution is shown in figures 2a and 2b.

Figure 2b illustrates the parameters of the capacitor 6 which are relevant to the calculation of the capacitance C of the capacitor 6 according to above given formula 1. As can be seen from this figure, the relevant parameters are the area "A" of the conductive plates 5, 5'. The distance d equals the distance between the two conductive plates 5, 5'. Distance d may be given in meters. The space in between the two plates 5, 5' contains a dielectric material with a permittivity $\varepsilon$. Both conductive plates 5, 5' are connected to a voltage source through leads 51. If the areas A and the distance d are known, then a change of the capacitance C of capacitor 6 may be indicative of a change of a temperature T of the capacitor 6. This effect can be used in the present invention for determining the temperature T of the capacitor 6. This is simplified by the area A and the distance d usually remaining constant. Hence, these parameters do not need to be measured once they have been set or established.

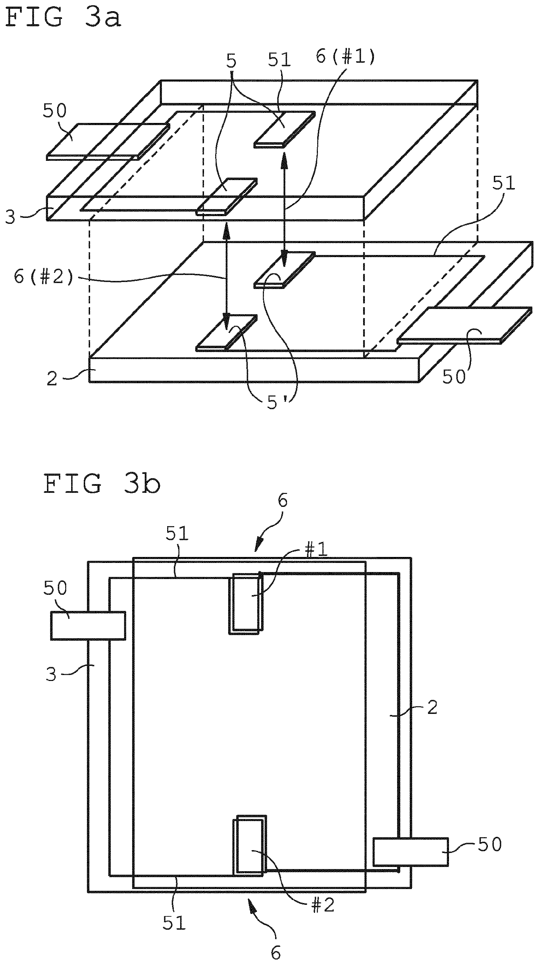

Figures 3a and 3b illustrate the positioning of two capacitors 6 and their wiring on the two substrates 2, 3 of an antenna panel 1. In Figure 3a, the bottom substrate 2 is shown below the top substrate 3 in a side view. Figure 3b shows both substrates 2, 3 superimposed on each other in a top view.

The panel 1 shown in figures 3a and 3b comprises two separate capacitors formed by a total of four conductive plates 5, 5'. The capacitors 6 thus formed and shown in figure 3b form the temperature sensors of the panel 1. For better reference, capacitors 6 are numbered #1 and #2 in figure 3b. The temperature sensors may be ITO sensor devices. Their shape may be rectangular with a surface area of e.g. 5 mm x 20 mm, i.e. 100 mm² each. However, the shape of the capacitors 6, i.e. the shape of the conductive plates 5, 5' can be of any desirable shape to fit between adjacent components of the antenna panel.

Figures 3a and 3b show that a connection device 50 is provided on each of the substrates 2, 3. The connection device 50 may be designed to provide an electronic connection between the capacitors 6 and the outside of the panel 1. The connection devices 50 may be connected to the conductive plates 5, 5' of the capacitors 6 via leads 51. The connection devices 50 may be arranged such that they extend outside the surface areas of the conductive plates 5, 5'. This makes it possible to contact the connection devices 50 from the outside and therefore provide a connection between capacitors 6 arranged inside the panel 1 and the outside of the panel 1. The connection devices 50 may be arranged near diagonally opposite corners of the rectangular panel 1. The substrates 2, 3 may be similar or identical in surface area and shape. When attached to each other, the substrates 2, 3 may be offset with respect to each other, such that they do not overlap fully.

As can be seen in figures 3a and 3b, the leads 51 may be arranged along the edges of the conductive plates 5, 5'. The leads 51 may be of a rectangular shape, which may be similar to the shape of the conductive plates 5, 5'. Two electrodes of the LC temperature sensor formed by the capacitors 6 can be routed through bias voltage points to the outside of the panel 1.

The substrates 2, 3 shown more closely in figures 3a and 3b may be made of glass or any other suitable material. The conductive plates 5, 5' may be metal plates or may be made of any other suitable conductive material. The antenna panel 1 comprises at least one electronic circuit connected to the capacitor 6.

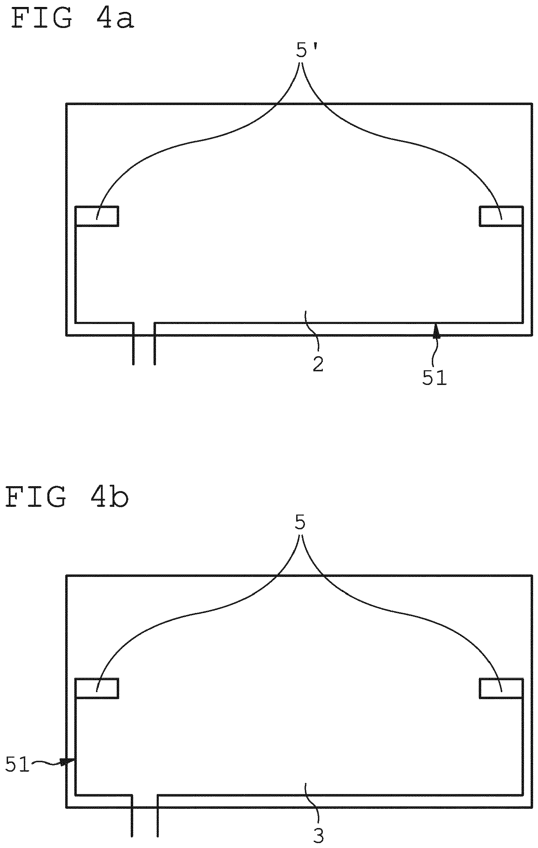

Figures 4a and 4b illustrate the positions of the capacitor components on two substrates 2, 3 forming an antenna panel 1 as shown in figures 3a and 3b. As can be seen in figures 4a and 4b, two conductive plates 5, 5' are provided on each substrate 2, 3. The conductive plates 5, 5' of one substrate 2, 3 may be connected to each other by leads 51 or traces. The bottom substrate 2 together with its conductive plates 5' may be symmetrical to the top substrate 3 together with its conductive plates 5. When the substrates 2, 3 are placed on top of each other, neighboring conductive plates 5, 5' form capacitors 6 as shown in figures 3a and 3b.

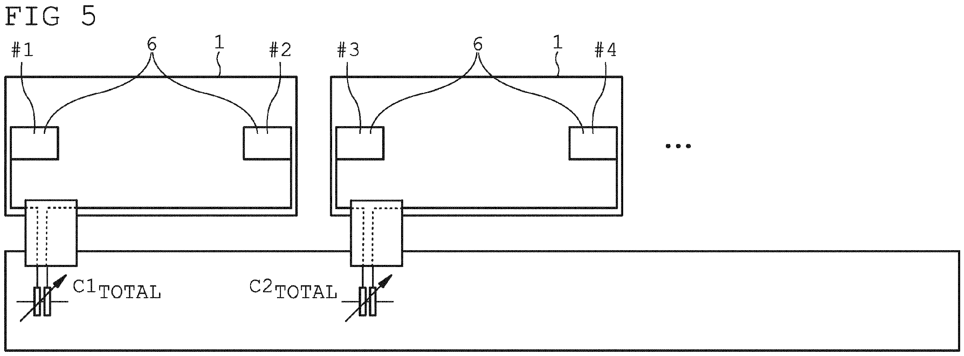

Figure 5 is a schematic view of two liquid crystal antenna panels 1 including two capacitors 6 each. The four capacitors 6 are identified as capacitors #1, #2, #3 and #4. Each capacitor 6 may consist of two conductive plates 5, 5', positioned opposite each other as shown in figures 3a and 3b.

Inside each panel 1 there may be two or more conductive plates 5, 5' forming capacitors 6. The capacitors 6 may be connected in parallel to each other, summing the capacitance of individual capacitors 6 and therefore increasing the total capacitance present in one panel 1. Thus, the two capacitors 6 labeled #1 and #2 of the first panel 1 combine to a summed capacitance C1TOTAL, and the two capacitors 6 labeled #3 and #4 of the second panel 1 combine to a summed capacitance C2TOTAL.

The summed capacitances C1TOTAL, C2TOTAL of two capacitors 6 connected in parallel to each other may be connected to a printed circuit board for distribution of temperature information from each individual panel 1.

Although figure 5 only shows two panels 1, a multitude of panels 1 may be employed in a phased array antenna.

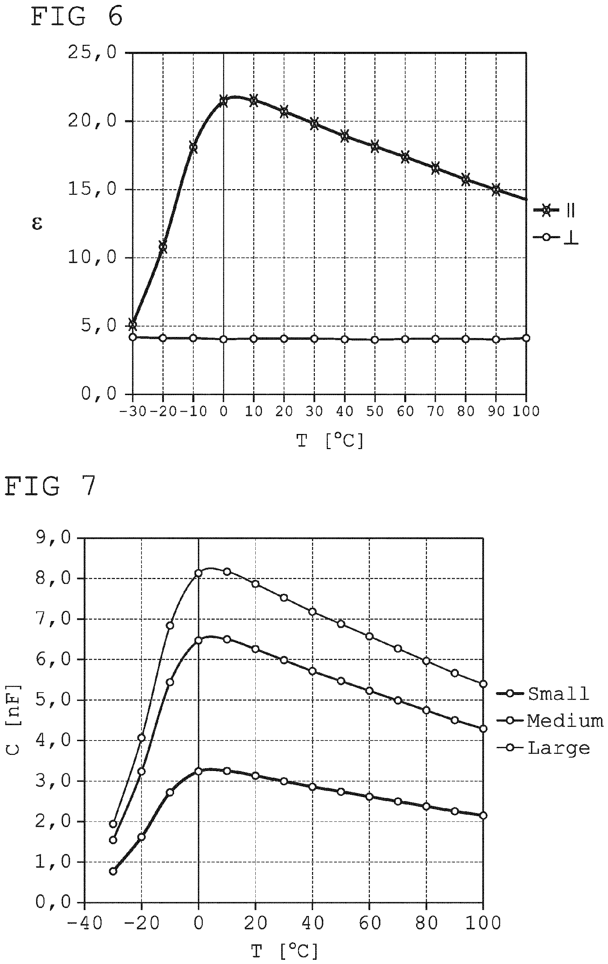

Figure 6 is a graph depicting the change of dielectric properties ε of liquid crystal material as a function of temperature T. As can be seen, the dielectric properties ε of liquid crystal in a parallel direction labeled ∥ in figure 6 vary as a function of the temperature T of the liquid crystal, reaching a maximum at about 0°C. Contrary thereto, the dielectric properties ε of liquid crystal in a perpendicular direction labeled ⊥ in figure 6 do not significantly vary as a function of the temperature T of the liquid crystal. If the dielectric property ε of the liquid crystal or the corresponding capacitance C of a capacitor is known, then the temperature T of the dielectric and therefore the approximate temperature of the capacitor and its surrounding can be determined. As a conclusion, a capacitor separated by a liquid crystal as a dielectric can be used as a temperature sensor. This kind of temperature sensor, which may be built into many antenna panels 1 of a phased array antenna, provides a cost-effective way to measure the antenna temperature or rather the temperature of individual panels 1 of an antenna. This is especially true, as capacitors 6 or rather conductive plates 5, 5' of corresponding capacitors 6 can be easily processed on the substrates 2, 3 of an antenna panel 1 as shown in figures 3a, 3b.

Figure 7 is a graph depicting the capacitor capacitance C as a function of temperature T and capacitor sizes. As shown in previous figure 6, the dielectric property ε of a liquid crystal in a capacitor changes with temperature T, yielding a corresponding change in capacitance C of the capacitor.

Graphs labeled "small", "medium" and "large" area in figure 7 show the temperature dependence for capacitors with different areas of conductive plates. The labels "small", "medium" and "large" may represent different conductive plate areas in e.g. $mm^2$ of capacitors of varying sizes.

As can be seen, the range of capacitance C increases for a given temperature range with increased area of the conductive plates 5, 5'. As an example, a capacitor sized "small" exhibits a capacitance range of ca. 0.8nF to ca. 3.3nF in a temperature range of ca. -30°C to ca. 100°C, the peak value of ca. 3.3nF being at ca. 0°C. A capacitor sized "large" exhibits a capacitance range of ca. 2.0nF to ca. 8.1nF in the same temperature range.

An area increase of the capacitors conductive plates 5, 5' therefore means better accuracy or resolution in terms of temperature measurements. As pointed out above, the conductive plate area may be the sum of two or more capacitors and hence conductive plate areas combined together.

The curves of figure 7 show that the capacitance C of a given capacitor may reach a maximum value at around 0°C. Therefore, a given capacitance C may indicate two different temperatures T, one below and one above 0°C. In the case of the graph labeled "large", a capacitance of 6.0nF may indicate a temperature T of ca. -12°C and 80°C.

In order to resolve this ambiguity, a temperature indicator may be provided in the panel to indicate whether the temperature of the panel is below or above the temperature of the peak value of the capacitance as shown in figure 7. The temperature indicator can hence broadly indicate whether the capacitor is at a high or a low temperature regime. The low temperature regime may extend between -40°C and 0°C and the high temperature regime may extend between 0°C and 100°C in the shown example. The temperature indicator therefore does not need to indicate precise temperatures and may be a correspondingly simple device.

In a simple variant, the temperature indicator may comprise a heating or cooling device, designed to introduce heat energy into or release heat energy from the panel at a known rate. If the rate of the heat transfer is known and the corresponding rate of change of capacitance is measured, the temperature regime can be deduced from the rate of change in capacitance. This is due to the fact, that the capacitance changes more rapidly at a low temperature regime below e.g. 0°C than above 0°C. The curves shown in figure 7 are therefore steeper on the left-hand side than on the righthand side of the graphs. However, any other method or device can be employed as a temperature indicator to broadly determine the temperature regime.

Figure 8 shows a graphic representation of a possible look-up table stored in a memory device of e.g. an antenna control unit 10 described further below with reference to figure 9. The graphs of previously described figures 6 and 7 may also be regarded as graphic representations of possible look-up tables used with the invention. The graph of figure 8 is based on phase shift ΔΦ versus bias voltage VB curves of a phase shifter for different temperature regimes. The temperature regimes cited in figure 8 are low temperature labeled with squares, room temperature labeled with triangles and high temperature labeled with circles. Obviously, more precise temperature regimes can be determined. More precise look-up tables may provide corresponding values and therefore curves for e.g. every single integral temperature between a low and a high temperature. The low temperature may be understood to be around -40°C and the high temperature may be understood to be around 100°C. Accordingly, a curve may be provided for -40°C, another curve may be provided for -39°C, another curve may be provided for -38°C and so on. Data can be provided for any required temperature ranges and with any needed precision. In order to solve temperature instability problems, different look-up tables can be provided for the different temperatures. In order to create said look-up tables, numerous measurements of the required parameters and under varying temperature conditions may be performed by a skilled person.

Figure 9 is a schematic view of the electronic circuit 7 connected to the capacitor 6 and used for assessing the capacitance of the capacitor 6. The total capacitance $C_{TOTAL}$ may be the sum of a number of capacitors 6 connected to each other. The voltage may be applied through a resistor 8 and the capacitor 6 may be grounded. The capacitor 6 and the resistor 8 may be connected to the positive input terminal of an evaluation circuit 9. The negative input terminal of comparator 9 may be connected to a reference voltage $V_{ref}$. The output of the evaluation circuit 9 may be linked to an antenna control unit 10 for determination of the capacitor characteristics and comparison of the actual capacitor characteristics to values stored in a look-up table. The look-up table may be stored in a memory device of the antenna control unit 10.

By means of electronic circuit 7 of figure 9, a signal corresponding to the capacitance C or change of capacitance C of the capacitor 6 can be converted to digitally readable data for the antenna control unit 10. The capacitor 6 in figure 9 corresponds to the liquid crystal temperature sensor of the antenna panel 1 of figures 3a and 3b.

If a PWM pulse is input to the capacitor 6 as an applied voltage $V_{applied}$, the PWM frequency at the output from the evaluation circuit 9 to the antenna control unit 10 will change depending on the temperature T of the capacitor 6. Thus, the output voltage from the evaluation circuit 9 to the antenna control unit 10 may be indicative of the capacitance C and therefore the temperature T of the capacitor 6. In particular, the frequency of the PWM input into the capacitor 6 may lead to a different response or output signal of the capacitor 6 as a function of the temperature T of the capacitor 6. The response frequency of the capacitor 6 to the input frequency is therefore different from the input frequency. Measuring this change and analyzing it through the antenna control unit 10 can give information on the liquid crystal panel temperature.

The antenna panel 1 as shown in e.g. figures 3a and 3b comprises an internal or external antenna control unit 10, in which at least one look-up table may be stored in a memory device. The antenna control unit 10 may be part of the liquid crystal antenna panel system. Said look-up table may comprise the characteristics of the liquid crystal antenna panel 1 for different temperatures, wherein the characteristics comprise the dielectric constant of the liquid crystal and/or the phase shifts $\Delta\Phi$ of a phase shifter for given bias voltages VB and/or the temperature effect on the voltage applied to the capacitor 6.

In a first step, the antenna control unit 10 may identify a temperature T of the capacitor 6 based on the signal received by the antenna control unit 10. The signal received by the antenna control unit 10 may be a PWM signal, the frequency and pulse width of which deviates from the known frequency and pulse width of the PWM signal input into the capacitor 6 depending on the temperature of the capacitor 6. The corresponding look-up table may contain information which attributes certain temperature values to certain measured deviations between the known frequency and/or pulse width input into the capacitor and the frequency and/or pulse width response of the capacitor circuit received by the antenna control unit 10.

In a second step, the antenna control unit 10 may identify the actual capacitance C of the capacitor from the above determined temperature T of the capacitor 6 and its dielectric. Another look-up table may be stored in the antenna control unit 10 for this purpose. Once the actual capacitance C has been determined, the antenna control unit 10 can compensate the temperature effect on panel 1 when providing input signals to the phase shifter pertaining to the corresponding panel 1.

In an alternative or additional second step, the antenna control unit 10 may identify a required bias voltage VB for a given temperature T of the capacitor 6 and a desired phase difference $\Delta\Phi$ or phase shift $\Delta\Phi$ from another look-up table, as shown in figure 8. Once the bias voltage needed for a desired phase shift $\Delta\Phi$ of the corresponding panel 1 is determined in this way, the antenna control unit 10 may use this bias voltage VB to control the corresponding panel 1 stably in different temperature regimes and without any temperature control devices for maintaining the panel temperature at a desired, stable operating temperature. With the help of circuits such as the ones mentioned with reference to figure 9 above, it is possible to increase temperature stability for liquid crystal-based antennas.

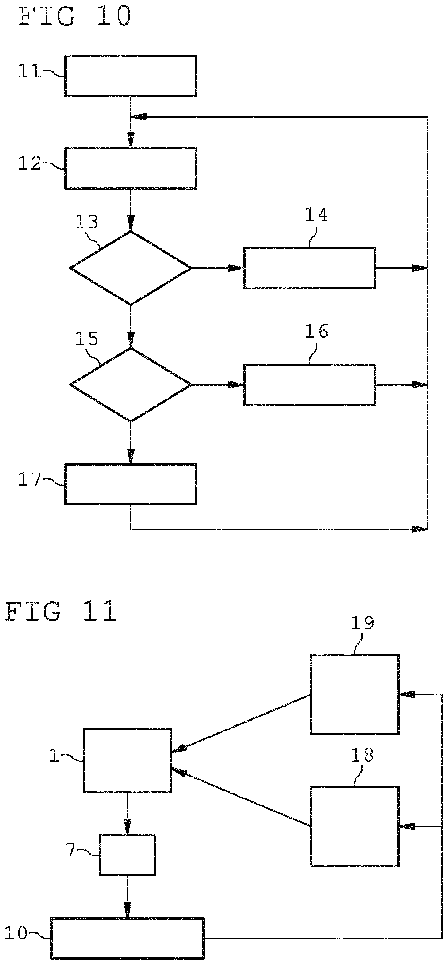

A flow diagram for the corresponding method is given in figure 10, describing the functioning of liquid crystal phased array antennas as described in the present document.

When an antenna according to the present invention is turned on, power is supplied to its components in a first step 11. In a second step 12, the antenna control unit 10 may apply a voltage to the capacitor 6 of the panel 1 as shown in figures 9 and 1a. The initially applied voltage may then be read out through the electronic circuit 7 and interpreted by the antenna control unit 10 shown in figure 9.

If the antenna control unit 10 determines in a third step 13 that the applied voltage has been distorted by the capacitor 6 in a way which indicates that a major temperature change of the panel 1 has occurred that requires active temperature control measurements, the antenna control unit 10 may then determine to activate and operate a temperature control unit 14 that affects the temperature of the panel 1 in order to minimize temperature changes to the panel 1. Either always or in case that no operation of the temperature control unit 14 is required, in a fourth step 15 a possible temperature change of panel 1 is evaluated and it is determined if an update of the current operation mode is required. If an update is required, the antenna control unit 10 may load a different antenna driver as well as determine adequate operation parameters for operating the panels 1 of the antenna, such as the reference power value and/or the required bias voltage VB from a look-up table in an additional updating step 16. The operation mode of the antenna may hence comprise the modifications of input signals needed for adjusting temperature effects when driving the phase shifters of individual antenna panels.

If, in the fourth step 15, the antenna control unit 10 determines that no update of the current operation mode is required, the antenna control unit 10 can keep the recent settings of the operation mode unchanged in a fifth step 17 and afterwards return to the second step 12 to read in sensor data anew.

Fig. 11 shows a schematic diagram of the relevant components for operating the panel 1. The temperature information is evaluated within the electronic circuit 7 on the basis of the capacitance C of the one or more capacitors 6 within the panel 1. The antenna control unit 10 determines on the basis of the temperature information if there is a need to update the operation parameters for operating the panel 1 of the antenna, such as the reference power value and/or the required bias voltage VB from a look-up table. The maintained or updated operation parameters are transferred to a driver unit 18 that operates the panel 1. In case that a change of temperature T of the panel 1 is detected that requires active temperature control measurements, a temperature control unit 19 is activated and operated by the antenna control unit 10 that affects and changes the temperature T of the panel 1 in order to minimize unwanted temperature changes of the panel 1.

References

| 1 | array antenna panel |
| 2 | bottom substrate |
| 3 | top substrate |
| 4 | liquid crystal |
| 5, 5' | conductive plates |
| 6 | capacitor |
| 7 | electronic circuit |
| 8 | resistor |
| 9 | evaluation circuit |
| 10 | antenna control unit |
| 11 | first step |
| 12 | second step |
| 13 | third step |
| 14 | operation of temperature control unit |
| 15 | fourth step |
| 16 | updating step |
| 17 | fifth step |
| 18 | driver unit |
| 19 | temperature control unit |
| 50 | connection device |
| 51 | lead |

**Claims**

1. A liquid crystal antenna panel (1) system for a phased array antenna, comprising
   a bottom and a top substrate (2, 3),
   a liquid crystal (4) provided between the two substrates (2, 3),
   a liquid crystal-based phase shifter,
   a memory device, and
   conductive plates (5, 5') positioned on each of the substrates (2, 3) and spaced at a distance from each other, wherein
   the conductive plates (5, 5') form at least one capacitor (6) between the substrates (2, 3), said capacitor (6) being connectable to an electronic circuit (7) and functioning as a temperature sensor for sensing the temperature of the liquid crystal antenna panel (1),
   **characterized in that**
   a look-up table is stored in the memory device, said look-up table comprising characteristics of the liquid crystal antenna panel (1) system, wherein the liquid crystal antenna panel (1) system is designed to determine the temperature of the liquid crystal antenna panel (1) from an output signal of the capacitor (6) and the look-up table.

2. A liquid crystal antenna panel (1) system according to claim 1, **characterized in that** the substrates (2, 3) are glass panels and/or the conductive plates (5, 5') are metal plates and/or the antenna panel (1) system comprises at least one electronic circuit (7) connected to the capacitor (6).

3. A liquid crystal antenna panel (1) system according to claim 1 or 2, **characterized in that** at least two capacitors (6) are provided in one panel (1), wherein said capacitors (6) are connected in parallel.

4. A liquid crystal antenna panel (1) system according to any of the preceding claims, **characterized in that** a temperature indicator to indicate at least a high and a low temperature regime is provided.

5. A liquid crystal antenna panel (1) system according to any of the preceding claims, **characterized in that** the electronic circuit (7) comprises an evaluation circuit (9) that evaluates a response signal from the capacitor (6).

6. A liquid crystal antenna panel (1) system according to any of the preceding claims, **characterized in that** a voltage applied to the capacitor (6) is a pulse width modulated voltage or a dc voltage.

7. A liquid crystal antenna panel (1) system according to any of the preceding claims, **characterized in that** the antenna panel (1) system comprises an antenna control unit (10), in which the look-up table is stored, wherein the characteristics stored in the look-up table comprise the dielectric constant of the liquid crystal and/or the phase shifts for given bias voltages and/or the temperature effect on the voltage applied to the capacitor (6).

8. Phased array antenna comprising at least one liquid crystal antenna panel (1) system according to any one of claims 1 to 7.

9. Phased array antenna according to claim 8, **characterized in that** it comprises at least one electronic circuit (7) connected to the capacitor (6) and/or a temperature regulation unit and/or multiple separate circuits (7), each separate circuit (7) being dedicated to a different liquid crystal antenna panel (1) system of the antenna.

10. Method for operating a phased array antenna according to claim 8 or 9, comprising the steps:

    inputting an input signal into a capacitor (6) located within a liquid crystal antenna panel (1) of the antenna,
    measuring a corresponding output signal of the capacitor (6) as a reaction to the input signal,
    determining, from a look-up table, a value representative of the current temperature of the capacitor (6) based on the output signal, and
    adjusting an input signal into a phase shifter of the antenna based on another look-up table and the previously determined value representative of the current temperature of the capacitor (6).

11. Method according to claim 10, **characterized in that** it comprises a step of determining the temperature regime of the capacitor (6) by means of a temperature indicator.

12. Method according to claim 11, **characterized in that** the step of adjusting the input signal into the phase shifter takes into account the temperature regime of the capacitor (6) determined by means of the temperature indicator.

13. Method according to any of claims 10 to 12, **characterized in that** the input signal into the capacitor (6) is a pulse width modulated voltage or a dc voltage.

14. Method according to any of claims 10 to 13, **characterized in that** the input signal into the phase shifter is a voltage.

15. Method according to any of claims 10 to 14, **characterized in that** the temperature of the liquid crystal antenna panel (1) is regulated by means of a temperature regulation unit and based on the previously determined value representative of the current temperature of the capacitor (6) .

FIG 1a

FIG 1b

# FIG 2a

# FIG 2b

FIG 3a

FIG 3b

FIG 4a

5'

2

51

FIG 4b

5

51

3

FIG 5

FIG 6

FIG 7

## FIG 8

## FIG 9

FIG 10

FIG 11

Europäisches
Patentamt

European
Patent Office

Office européen
des brevets

# EUROPEAN SEARCH REPORT

**Application Number**

EP 19 20 9271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/205156 A1 (LI I-YIN [TW] ET AL) 19 July 2018 (2018-07-19) | 1-9 | INV. H01P1/18 |
| A | * paragraphs [0005], [0029] - [0031], [0033], [0037], [0040] * <br> * figures 1, 3 * | 10-15 | H01Q3/34 |
| A | US 2018/146511 A1 (STEVENSON RYAN [US] ET AL) 24 May 2018 (2018-05-24) <br> * paragraphs [0095] - [0105] * <br> * figure 9 * | 1-15 | |
| A | JP 2006 140614 A (KOBE STEEL LTD) 1 June 2006 (2006-06-01) <br> * abstract * <br> * paragraphs [0002], [0013] * <br> * figures 1,2 * | 1-15 | |

**TECHNICAL FIELDS SEARCHED (IPC)**

H01P
H01Q

The present search report has been drawn up for all claims

| Place of search | Date of completion of the search | Examiner |
|---|---|---|
| The Hague | 9 April 2020 | Mitchell-Thomas, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 9271

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2020

| Patent document cited in search report | Publication date | Patent family member(s) | Publication date |
|---|---|---|---|
| US 2018205156 A1 | 19-07-2018 | NONE | |
| US 2018146511 A1 | 24-05-2018 | CN 109643841 A<br>JP 2019521618 A<br>KR 20190020840 A<br>TW 201811110 A<br>US 2018146511 A1<br>WO 2018017876 A1 | 16-04-2019<br>25-07-2019<br>04-03-2019<br>16-03-2018<br>24-05-2018<br>25-01-2018 |
| JP 2006140614 A | 01-06-2006 | NONE | |

EPO FORM P0459

For more details about this annex : see Official Journal of the European Patent Office, No. 12/82